# EUROPÄISCHE PATENTSCHRIFT

(11) **EP 2 313 968 B1**
(45) Veröffentlichungstag und Bekanntmachung des Hinweises auf die Patenterteilung: **09.10.2013**
(21) Anmeldenummer: 09779989.4
(22) Anmeldetag: 29.06.2009
(51) Int. Cl.: H02P 29/02, H02P 7/295, H02P 25/04

(54) **VERFAHREN UND VORRICHTUNG ZUM ERMITTELN EINES BETRIEBSZUSTANDES EINER ELEKTRISCHEN MASCHINE**
METHOD AND DEVICE FOR DETERMINING THE OPERATING STATE OF AN ELECTRIC MACHINE
PROCÉDÉ ET DISPOSITIF DE DÉTERMINATION DE L'ÉTAT DE FONCTIONNEMENT D'UNE MACHINE ÉLECTRIQUE

(30) Priorität: 07.08.2008 DE 102008041080
(43) Veröffentlichungstag der Anmeldung: 27.04.2011
(73) Patentinhaber: Robert Bosch GmbH, 70442 Stuttgart (DE)
(72) Erfinder: SINGLE, Ulrich, Penang 11900 (MY)
(86) Internationale Anmeldenummer: PCT/EP2009/058079
(87) Internationale Veröffentlichungsnummer: WO 2010/015461

(56) Entgegenhaltungen:
- EP-A1- 0 720 266
- EP-A1- 1 806 836
- DE-A1- 1 915 002
- DE-A1- 2 355 787
- DE-A1-102005 062 864
- DE-U1- 9 312 050

## Beschreibung

Die Erfindung betrifft eine Vorrichtung, welche eine elektrische Maschine, eine Spannungserfassungsvorrichtung und eine Auswertevorrichtung umfasst. Außerdem umfasst die elektrische Maschine ein festes Teil sowie ein bewegliches Teil, das relativ zu dem festen Teil beweglich ist. Der feste oder der bewegliche Teil der elektrischen Maschine weist eine Feldwicklung auf, an der während eines Betreibens der elektrischen Maschine eine erste elektrische Spannung anliegt. Der andere der beiden Teile der elektrischen Maschine weist eine Ankerwicklung auf, in der während des Betreibens der elektrischen Maschine aufgrund einer Relativbewegung zwischen dem festen und beweglichen Teil der elektrischen Maschine eine zweite elektrische Spannung induziert wird. Die Auswertevorrichtung ist dazu vorgesehen, einen Betriebszustand der elektrischen Maschine unter Berücksichtigung des erfassten Merkmals einer elektrischen Spannung zu ermitteln.

Außerdem betrifft die Erfindung ein Verfahren zur Ermittlung eines Betriebszustandes einer elektrischen Maschine, wobei die elektrische Maschine zur Umwandlung von elektrischer in mechanische Energie und/oder von mechanischer in elektrische Energie vorgesehen ist, wobei das Verfahren folgende Schritte umfasst: Direktes oder mittelbares Erfassen eines Effektivwerts einer ersten elektrischen Spannung und Ermitteln eines Betriebszustands der elektrischen Maschine unter Berücksichtigung des erfassten Effektivwerts der ersten elektrischen Spannung. Unter Effektivwert wird vorzugsweise der quadratische Mittelwert einer physikalischen Größe (hier Spannung) über eine Zeitspanne verstanden. Vorzugsweise umfasst die Zeitspanne eine oder mehrere Halbwellen eines näherungsweise periodischen Verlaufs der physikalischen Größe.

### Stand der Technik

Elektrogeräte und Elektrowerkzeuge umfassen häufig eine Elektronik, um Regelungsfunktionen, Leistungssteigerung, Schutzfunktionen oder Zusatzfunktionen zu verwirklichen. Zu diesen Funktionen gehören beispielsweise eine Drehmomentbegrenzung, ein Kipppunkt und ähnliche drehzahl- oder belastungsabhängige Funktionen. Dafür umfasst die Elektronik eines modernen Elektrowerkzeuges typischerweise einen Mikrocontroller (µC) oder einen digitalen Signalprozessor (DSP). Für eine Regelung einer Drehzahl in einem Elektrogerät mittels eines geschlossenen Regelkreises ist eine Erfassung von Istwerten erforderlich, die typischerweise Motormessgrößen (im Sinne eines sampling) zyklisch abgetastet und mit einem Mikrocontroller oder digitalen Signalprozessor ausgewertet werden. Dazu werden die Messgrößen zunächst mittels spezieller Analogschaltungen aufbereitet und Kanälen eines Analog-DigitalWandlers zwecks Umwandlung in digitale Signale zugeführt. Zur Ermittlung des Betriebszustandes einer elektrischen Maschine wird eine Information über die Stärke des Motorstroms benötigt. Strommessungen werden üblicherweise nicht direkt, sondern nur mittelbar mittels Spannungsmessungen durchgeführt. Die DE 32 15 734 A1 schlägt dazu vor, das Drehmoment eines Motors nur anhand der am Motor anliegenden Effektivspannung und der Drehzahl zu bestimmen, wobei letztere mittels eines Tachometers gemessen wird. Mit diesen Eingangsgrößen und einem Kennlinienfeld für den Motor werden als Ausganggröße ein Motorstrom und/oder ein Drehmoment ermittelt, und zwar ohne Verwendung eines Strommesswiderstands (Shunts). Da eine Höhe des Drehmoments des Motors im Wesentlichen nur von einer Höhe des Motorstroms abhängig ist, kann aus dem ermittelten Drehmoment - anhand einer vorvermessenen, bekannten Motorkennlinie - auf die Höhe des Motorstrom zurückgeschlossen werden. Dies gilt unabhängig davon, ob bei dem Elektromotor eine Sättigung des magnetischen Kreises schon unterhalb des Nennstroms eintritt oder nicht. Konventionelle Vorrichtungen zur Ermittlung eines Betriebszustandes, wie die in DE 32 15 734 A1 beschriebene, haben den Nachteil, dass ein Tachometer benötigt wird, der Baugröße und Herstellungskosten des Motors nachteilig beeinflusst.

Die Offenlegungsschrift EP 1 806 836 A1 zeigt einen Elektromotor, wobei eine an der Ankerwicklung abfallende Spannung gemessen wird. Die gemessene Spannung wird dann einem Differenzialverstärker zugeführt.

Die Offenlegungsschrift DE 10 2005 062 864 A1 zeigt ein Verfahren und eine Schaltungsanordnung zur Drehzahlregelung eines Kommutator-Reihenschlussmotors.

Die Offenlegungsschrift EP 0 720 266 A1 zeigt ein Verfahren und eine Einrichtung zur Temperaturüberwachung bei Universalmotoren.

Die Gebrauchsmusterschrift DE 93 12 050 U1 zeigt eine Vorrichtung zur Regelung der Leistungsaufnahme eines Staubsaugers.

Die Offenlegungsschrift DE 19 15 002 A1 zeigt eine Schaltungsanordnung zur Erzielung eines möglichst großen Drehzahlregel- und Steuerbereichs für mit Wechselstrom gespeiste Universalmotoren.

Die Offenlegungsschrift DE 23 55 787 A1 zeigt ein Verfahren zur Erfassung der Drehzahl eines Elektromotors.

### Offenbarung der Erfindung

Der Erfindung liegt die Aufgabe zugrunde, eine gattungsgemäße Vorrichtung bereitzustellen, mit der eine Drehzahl und/oder ein Drehmoment und/oder ein Motorstrom bei geringerer Baugröße und/oder mit geringeren Herstellungskosten ermittelt werden kann. Darüber hinaus ist es eine Aufgabe der Erfindung, ein Verfahren mit diesem Vorteil bereitzustellen.

Diese Aufgabe wird mit den Merkmalen der unabhängigen Ansprüche 1 und 6 gelöst. Vorteilhafte Ausführungsformen der Erfindung sind in den abhängigen Ansprüchen angegeben.

Die Erfindung baut auf einer gattungsgemäßen Vorrichtung dadurch auf, dass sich eine induzierte elektrische Spannung ergibt aus der Differenz einer zweiten elektrischen Messspannung, die über einer aus zumindest einer ersten Feldwicklung und einer Ankerwicklung bestehenden Reihenschaltung anliegt; wobei eine Spannungserfassungsvorrichtung dazu vorgesehen ist, ein Merkmal der induzierten elektrischen Spannung zu erfassen; und wobei eine Auswertevorrichtung dazu vorgesehen ist, einen Betriebszustand der elektrischen Maschine unter Berücksichtigung des erfassten Merkmals der induzierten elektrischen Spannung zu ermitteln.

Eine weitere bevorzugte Ausführungsform sieht vor, dass das erfasste Merkmal der induzierten elektrischen Spannung eine Höhe, ein Effektivwert und/oder eine Phasenlage der induzierten elektrischen Spannung ist.

In einer ebenso bevorzugten Ausführungsform der Vorrichtung ist der zu ermittelnde Betriebszustand ein Drehmoment, eine Drehzahl und/oder eine Stärke eines von der elektrischen Maschine aufgenommenen elektrischen Stroms.

Eine bevorzugte Weiterbildung der Vorrichtung sieht vor, dass die Auswertevorrichtung die Drehzahl unter Berücksichtigung eines Spannungsverhältnisses zwischen der induzierten Spannung und der ersten Messspannung ermittelt.

Eine besonders bevorzugte Ausführungsform sieht vor, dass zumindest ein Teil des Stroms, der durch die erste Feldwicklung fließt, auch durch eine zweite Feldwicklung fließt.

Die Erfindung baut auf einem gattungsgemäßen Verfahren dadurch auf, dass ein Effektivwert einer ersten elektrischen Messspannung an zumindest einer ersten Feldwicklung der elektrischen Maschine sowie ein Effektivwert einer zweiten elektrischen Messspannung an einer zumindest aus der ersten Feldwicklung und einer Ankerwicklung der elektrischen Maschine bestehenden Reihenschaltung direkt oder mittelbar erfasst werden und dass der Betriebszustand unter Berücksichtigung einer induzierten Spannung, die sich aus der Differenz der erfassten Effektivwerte der zweiten und der ersten elektrischen Messspannung erigbt, ermittelt wird.

Des Weiteren kann das Verfahren so ausgestaltet sein, dass der zu ermittelnde Betriebszustand ein Drehmoment, eine Drehzahl und/oder eine Stärke eines von der elektrischen Maschine aufgenommenen elektrischen Stroms ist.

Eine weitere vorteilhafte Ausgestaltung des Verfahrens sieht vor, dass die Drehzahl unter Berücksichtigung eines Spannungsverhältnisses zwischen den Effektivwerten der induzierten Spannung und der ersten Messspannung ermittelt wird.

### Kurze Beschreibung der Zeichnungen

Die Erfindung wird nun mit Bezug auf die begleitenden Figuren anhand besonders bevorzugter Ausführungsformen beispielhaft erläutert.

Es zeigen:
- Fig. 1: ein schematisches Übersichtsbild über einen Stromkreis einer erfindungsgemäßen Vorrichtung, die eine Phasenanschnittelektronik und einen Reihenschlussmotor umfasst;
- Fig. 2: einen idealisierten zeitlichen Verlauf einer Versorgungsspannung für die Vorrichtung auf einer Versorgungsseite der Phasenanschnittelektronik;
- Fig. 3: einen idealisierten zeitlichen Verlauf einer Versorgungsspannung an dem Reihenschlussmotor auf einer Lastseite der Phasenanschnittelektronik;
- Fig. 4: einen idealisierten zeitlichen Verlauf der Versorgungsspannung an der Vorrichtung auf der Versorgungsseite der Phasenanschnittelektronik zusammen mit einem zeitlichen Verlauf eines elektrischen Stroms, der durch den Reihenschlussmotor fließt;
- Fig. 5: an einer Werkzeugmaschine gemessene zeitliche Spannungsverläufe; und
- Fig. 6: an einer Werkzeugmaschine gemessene zeitliche Spannungsverläufe einschließlich Spannungsverläufen an einer ersten und einer zweiten Feldwicklung.

Im Folgenden werden Merkmale der in den Figuren dargestellten Anordnungen beschrieben, welche in einer gemeinsamen Ausführungsform verwirklicht sein können. Durch Verwendung übereinstimmender Bezugszeichen werden Verfahrensschritte und Komponenten hilfsweise auch mittels solcher Beschreibungsteile beschrieben, die anderen Figuren zugeordnet sind.

### Ausführungsformen der Erfindung

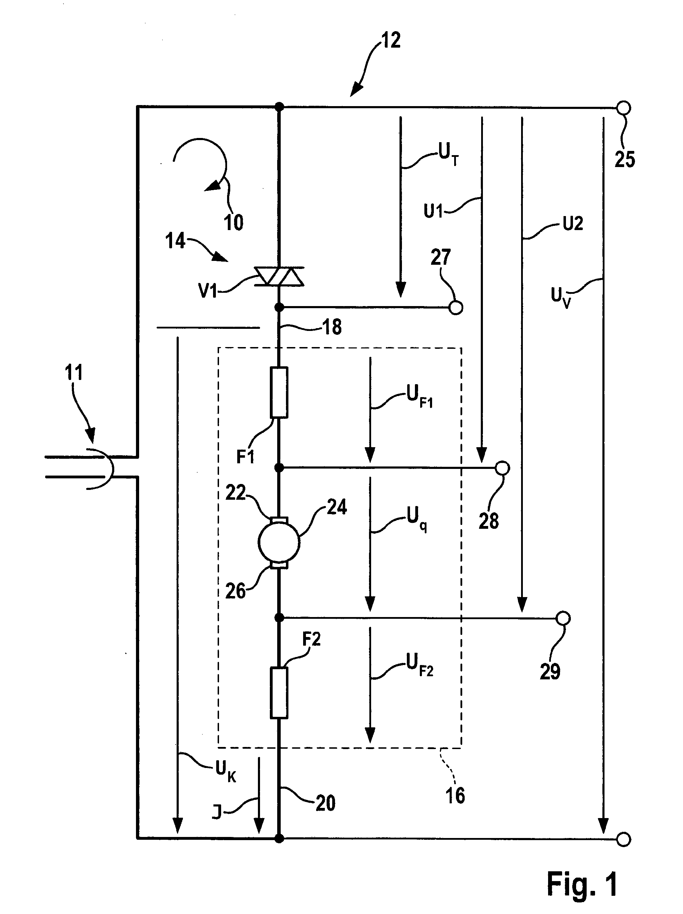

Der in Fig. 1 gezeigte Stromkreis 10 umfasst einen Stromversorgungsanschluss 11 und eine erfindungsgemäße Vorrichtung 12. Die Vorrichtung 12 beinhaltet eine Phasenanschnittelektronik 14 und einen Elektromotor 16. Der Elektromotor 16 ist typischerweise ein Reihenschlussmotor 16, und insbesondere vorzugsweise ein Universalmotor 16. In diesem Fall hat der Motor 16 typischerweise zwei Anschlüsse 18, 20 zwischen denen mindestens eine erste Feldwicklung F1, eine erste Bürste 22, eine Ankerwicklung 24, eine zweite Bürste 26 und eine zweite Feldwicklung F2 in Serie geschaltet sind. Erfindungsgemäß werden an dem Motor 16 eine erste Messspannung U1 und eine zweite Messspannung U2 abgegriffen und über Anschlüsse 25, 28, 29 einer (in der Figur nicht dargestellten) Auswertevorrichtung bereitgestellt. Die erste Messspannung U1 und die zweite Messspannung U2 sind mit einer Spannung U_{F1}, U_{F2} an der Feldwicklung F1 bzw. F2 identisch oder umfassen diese zumindest als Teilspannungen U_{F1} bzw. U_{F2}. Außerdem sind die abgegriffenen Messspannungen U1, U2 weder eine Versorgungsspannung U_{V} der Vorrichtung 12 noch eine Klemmenspannung U_{K} des Motors 16.

Zur Erläuterung des erfindungsgemäßen Auswerteverfahrens für die abgegriffenen Messspannungen U1, U2 wird nun zunächst angenommen, dass der Motor 16 ein Reihenschlussmotor 16 ist, der mit Gleichstrom betrieben wird. Zunächst werden motortypische Zusammenhänge von Betriebsgrößen n, Mi, I, Uq eines Reihenschlussgleichstrommotors 16 diskutiert. Solange der (in der Figur nicht dargestellte) durch die Feldwicklungen F1, F2 geführte magnetische Kreis des Motors 16 sich nicht in Sättigung befindet, beträgt - bei einem Reihenschlussmotor 16 - die in der Ankerwicklung 24 induzierte Spannung Uq näherungsweise Uq = CR * n * I, wobei n die Drehzahl, I der Motorstrom und CR eine Maschinenkonstante ist, die im Wesentlichen betriebsunabhängig ist. Der Spannungsabfall Uq an der Ankerwicklung 24 hängt also - abgesehen von der Maschinenkonstante CR - im Wesentlichen nur von der Drehzahl n des Motors 16 und dem Motorstrom I ab. Das Drehmoment des Reihenschlussmotors 16 berechnet sich zu Mi = CR/2π * I². Im eingeschwungenen Betrieb hängt das Drehmoment Mi also - abgesehen von der Maschinenkonstante CR - im Wesentlichen nur von dem Motorstrom I ab und ist proportional zu dem Quadrat des Motorstroms I. In einem Motorstrombereich, in dem sich der magnetische Kreis bereits in Sättigung befindet, hängt die in der Ankerwicklung 24 induzierte Spannung Uq nicht mehr von der Höhe des Motorstroms I ab, sondern ist nur noch proportional zur Drehzahl n. Das Drehmoment Mi des Reihenschlussmotors 16 ist dann proportional zum Motorstrom I. Für das Drehmoment Mi besteht dann also nur noch eine lineare Abhängigkeit vom Motorstrom I.

Die Feldwicklung F1 hat typischerweise einen reellen elektrischen Widerstand RF1, der an der Feldwicklung F1 einen Spannungsabfall UF1 in Höhe von UF1 = RF1 * I erzeugt. Im Prinzip kann diese Spannung UF1 an der Feldwicklung F1 abgegriffen und einer Spannungsmessvorrichtung zur Ermittlung des tatsächlichen Motorstroms I zugeführt werden. Entsprechendes gilt für die zweite Feldwicklung F2. Da diese Strommessung nur noch von einer nicht grundsätzlich auszuschließenden Nichtlinearität und/oder Temperaturabhängigkeit des ohmschen Widerstands der Feldwicklung F1 abhängt, wird diese Strommessung viel weniger von weiteren Einflussfaktoren beeinflusst als das eingangs beschriebenen konventionellen Messverfahren auf Grundlage eines Kennlinienfeldes. Folglich kann die erfindungsgemäße Ermittlung des Motorstroms I auf Grundlage der an der Feldwicklung F1, F2 abgegriffenen Spannung U_{F1}, U_{F2} wesentlich genauer sein als das eingangs beschriebene konventionelle Verfahren. Bei konstanter Last und konstanter Gleichstrom-Versorgungsspannung U_{V} ist der Motorstrom I im eingeschwungenen Zustand konstant. Dies gilt dann auch für die an den Feldwicklungen F1, F2 abgreifbaren Spannungsabfälle U_{F1}, U_{F2}.

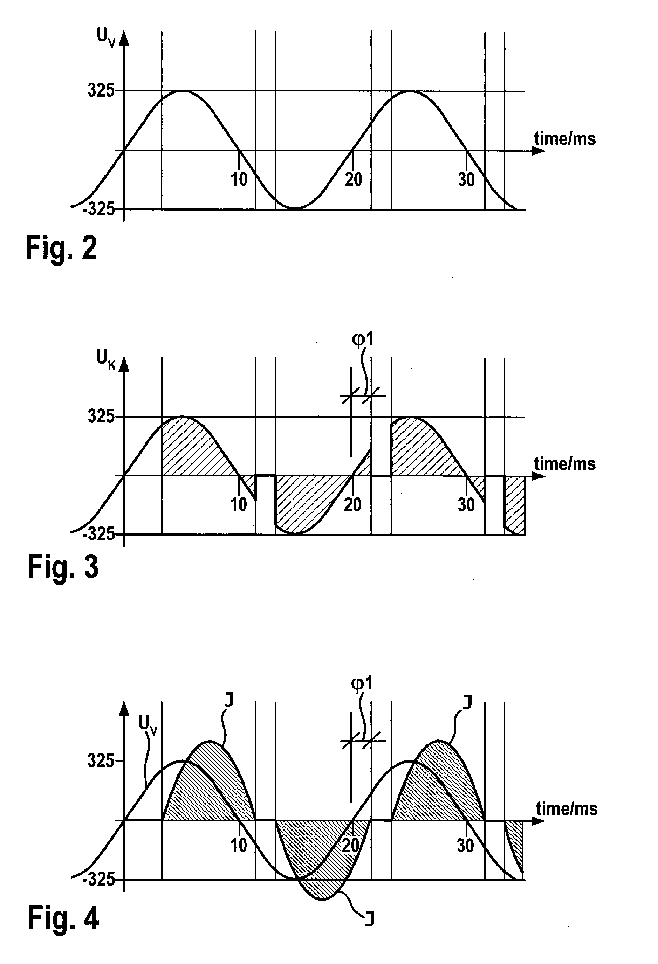

Eine Motorstromermittlung basierend auf einem Spannungsabfall U_{F1} oder U_{F2} an einer Feldwicklung F1 bzw. F2 kann auch bei einem mit Wechselstrom betriebenen Reihenschlussmotor 16, also einem Universalmotor 16 angewendet werden, wenn der Blindleitwert der Feldwicklungen F1, F2 im Verhältnis zu ihrem Wirkleitwert vernachlässigbar ist oder wenn in der analogen oder digitalen Messsignalaufbereitung eine Kompensation die induktive Wirkung der Feldwicklungen F1, F2 weitgehend eliminiert. Fig. 2 zeigt vereinfacht einen zeitlichen Verlauf einer Versorgungsspannung Uᵥ für die Vorrichtung 12 auf einer Versorgungsseite der Phasenanschnittelektronik 14. Fig. 3 zeigt vereinfacht einen zeitlichen Verlauf einer Versorgungsspannung U_{K} an dem Universalmotor 16 auf einer Lastseite der Phasenanschnittelektronik 14. Der Universalmotor 16 "sieht" eine phasenangeschnittene Spannung.

Fig. 4 zeigt vereinfacht einen zeitlichen Verlauf der Versorgungsspannung U_{V} an dem Universalmotor 18 auf der Versorgungsseite der Phasenanschnittelektronik 14 zusammen mit einem vereinfachten zeitlichen Verlauf des elektrischen Stroms I, der durch den Universalmotor 18 fließt. Der Stromfluss setzt ein, sobald der Triac V1 von der Phasenanschnittelektronik 14 gezündet wird. In dem in der Figur gezeigten Beispiel wird der Triac V1 nach dem ersten Drittel jeder Halbwelle gezündet. Folglich beträgt der Phasenanschnitt hier ca. 60°. Der Triac V1 bleibt solange leitend, bis eine Haltestromstärke des Triac V1 unterschritten wird. Der Haltestrom wird nach dem Nulldurchgang der netzseitigen Versorgungsspannung U_{V} und einem maschinenspezifischen Phasenwinkel ϕ1 (Nachlauf) unterschritten. Der Nachlauf ϕ1 entsteht bei einer induktiven Last (also auch bei einem Universalmotor) durch eine Phasenverschiebung zwischen Spannung U_{V} und Strom I. In dem in der Figur gezeigten Beispiel beträgt die Haltezeit nach dem Nulldurchgang der Versorgungsspannung U_{V} ca. 30°. Die Effektivwerte von Strom, Spannung und die Leistung lassen sich mittels Fourierzerlegung von Strom und Spannung, frequenzlinienspezifischer Multiplikation von Strom und Spannung (unter Berücksichtigung frequenzlinienspezifischer cos ϕ) und nachfolgender Addition der Leistungsbeiträge der Frequenzlinien berechnen (vgl. Parsevalsche Theorem). Bei kleinen Phasenanschnittwinkeln können die zeitlichen Verläufe der Spannung Uv und des Motorstroms als näherungsweise sinusförmig betrachtet werden. Die von dem Universalmotor 18 verbrauchte elektrische Wirkleistung P_{eff} ist gleich U_{Veff} * I_{eff} * cos ϕ2; wobei U_{Veff} den Effektivwert der Versorgungsspannung U_{K}, I_{eff} den Effektivwert des Motorstroms I und cos ϕ2 den sogenannten Wirkleistungsfaktor darstellen. Der Nachlauf ϕ2 und somit auch der Wirkleistungsfaktor cos ϕ2 sind maschinenspezifisch und belastungsabhängig. Näherungsweise kann unter Umständen angenommen werden, dass die Phasenwinkel ϕ1 und ϕ2 gleich groß sind.

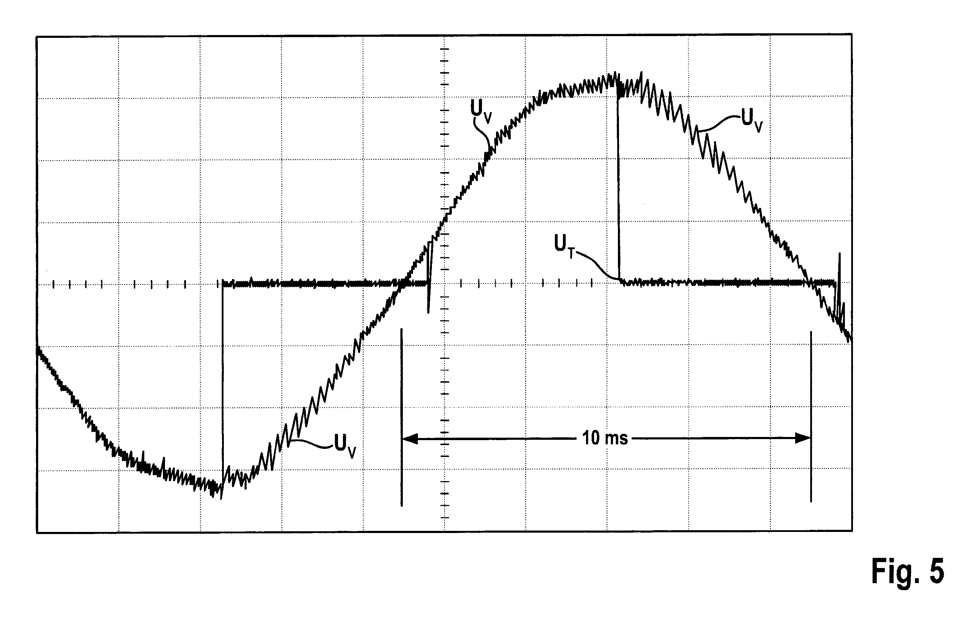

Bei dem in Fig. 5 gezeigten Spannungsverlauf von U_{T}, der an einem großen Winkelschleifer gemessenen wurde, ist der Phasenanschnitt etwa in der Mitte der Halbwelle, beträgt also ca. 90°. Im durchgeschalteten Zustand des Triac V1 ist der Spannungsabfall U_{T} an dem Triac V1 im Verhältnis zur Amplitude 325 der Versorgungsspannung U_{V} sehr klein. Dies überrascht nicht, da der Triac V1 sonst einen großen Anteil der Wirkleistung in Wärmeenergie umwandeln würde. Im nicht durchgeschalteten Zustand des Triac V1 folgt der Spannungsabfall an dem Triac V1 dem Verlauf der Versorgungsspannung U_{V}. Aus der Maschenregel folgt, dass die Motorspannung U_{K} in Zeiten, in denen der Triac V1 sperrt, ca. 0V beträgt.

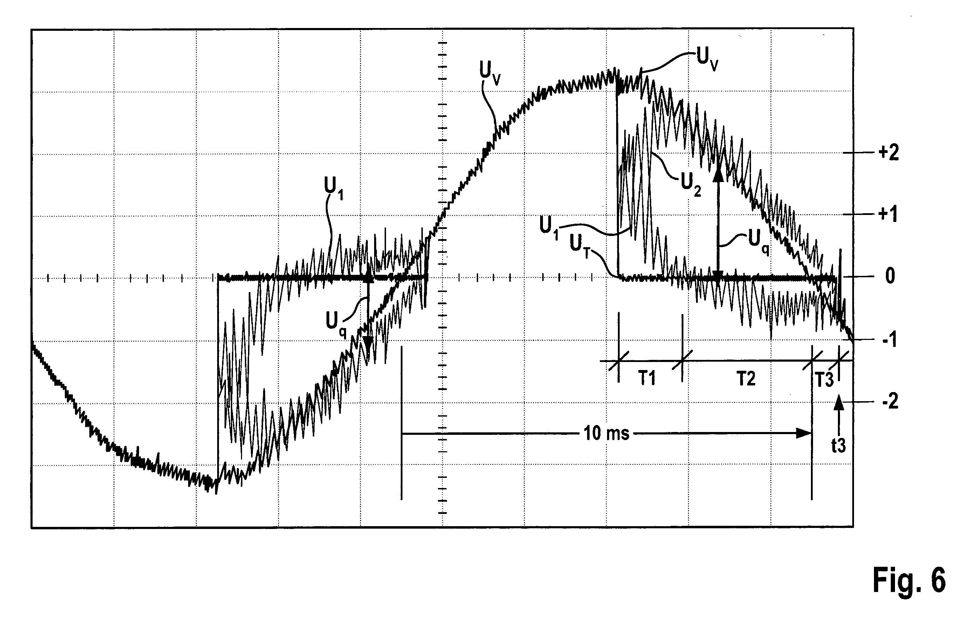

Fig. 6 zeigt für den stationären Betriebszustand (n, Mi, I) des großen Winkelschleifers 12 von Fig. 5 zusätzliche Spannungsverläufe U1, U2 an einer ersten Feldwicklung F1 und an einer zweiten F2 Feldwicklung, wobei U1 - neben U_{F1} - auch den Spannungsabfall U_{T} am Triac V1 und U2 - neben U_{F2} - auch die Versorgungsspannung U_{V} umfasst. Verdrahtungstechnisch ist eine Erfassung der Spannungen U1 und U2 häufig leichter zu verwirklichen als eine direkte Erfassung der Spannungen U_{F1} und U_{F2}. Aufgrund der Maschenregel lässt sich die Spannung zwischen den Bürsten 22 und 26 mittelbar ermitteln, und zwar aus der Differenz der Spannungen U2 und U1. Da der Spannungsabfall an jeder der beiden Bürsten 22, 26 gering ist, wird im Folgenden angenommen, dass der Spannungsabfall zwischen den Bürsten 22 und 26 näherungsweise so hoch wie die induzierte Spannung Uq (Ankerspannung). Die Spannung U_{F2} kann aus der Differenz zwischen der Versorgungsspannung U_{V} und der abgegriffen Spannung U2 ermittelt werden. Wegen des geringen Spannungsabfalls an U_{T} ist dafür allerdings keine Erfassung der Versorgungsspannung notwendig. Der Spannungsabfall U_{F1} ist in der Praxis näherungsweise so groß wie U1. Bei dem üblichen gleichen Aufbau der Feldwicklungen F1 und F2 ist somit U_{F1} = UF2 = U1. Direkt nach dem Zünden des Triac V1 beträgt die Spannung Uq zwischen den Bürsten 22 und 26 null Volt. Die Versorgungsspannung U_{V} teilt sich in diesem Moment an den beiden Feldwicklungen F1, F2 in zwei gleich hohe Spannungen U_{F1} und U_{F2} auf. In einem ersten Zeitabschnitt T1 nimmt die induzierte Spannung Uq = U2 - U1 bis zu einem Maximalwert zu, bei dem die Spannungen U_{F1} und U_{F2} an den beiden Feldwicklungen F1, F2 jeweils null Volt betragen. In einem zweiten Zeitabschnitt T2 nimmt die induzierte Spannung ab, weil die Versorgungsspannung U_{V} in der zweiten Hälfte der Halbwelle kleiner wird und sich die Summe der Teilspannungen U_{F1}, Uq und U_{F2} damit nun auch verkleinern muss. Allerdings erfolgt die Verkleinerung der induzierten Spannung Uq mit einem gewissen Zeitverzug T3 (Zeit zwischen Nulldurchgang der Versorgungsspannung U_{V} und dem Verlöschen des Triac V1 zum Zeitpunkt t3). Sofern die Netzspannung U_{V} und die Spannung Uq zwischen den Bürsten 22, 26 bekannt sind, ergibt sich die Summe der Spannungen U_{F1} und U_{F2} an den Feldwicklungen F1, F2 aus einer Differenz der Netzspannung U_{V} und Uq. Umgekehrt betrachtet kann durch das Erfassen und Auswerten der Spannungen U1 und U2 neben der induzierten Spannung auch die Versorgungsspannung U_{V} = Uq + U_{F1} + U_{F2} = ca. (U2 - U1) + U1 + U1 = U2 + U1 ermittelt werden. Da die induzierte Spannung Uq von der Drehzahl n abhängig ist, die Versorgungsspannung U_{V} jedoch nicht, stehen - wie bei dem eingangs beschriebenen konventionellen Universalmotor - zwei zueinander "unabhängige" Eingangsvariablen U1 und U2 (bzw. mittelbar U_{V} und Uq) zur Verfügung, mit denen bei bekannten Kennlinien des Motors 12 die aktuelle Motordrehzahl n und der aktuelle Motorstrom I ermittelt werden können. Die Unterschiede zu dem eingangs beschriebenen konventionellen Universalmotor bestehen also im Wesentlichen darin, dass statt der Versorgungsspannung U_{V} eine erste Messspannung U1 an verdrahtungstechnisch günstiger Stelle 28 im Bereich der Ankerwicklung 24 abgegriffen wird und dass statt Verwendung eines Tachometersignals eine zweite Messspannung U2 an einer anderen ebenfalls verdrahtungstechnisch günstigen Stelle 29 im Bereich der Ankerwicklung 24 abgegriffen wird. Damit steht letztlich statt des Tachometersignals die induzierte Spannung Uq zur Auswertung zur Verfügung, wodurch Platzbedarf und Herstellungsaufwand für das Tachometersignal eingespart werden können. Die Ermittlung der Motordrehzahl n und des Motorstroms I kann dann in entsprechender Weise wie bei dem eingangs beschriebenen konventionellen Motor unter Berücksichtigung von vorvermessenen Kennlinien des Motors 12 erfolgen.

Eine Weiterbildung der Erfindung sieht vor, dass aus der ersten Messspannung U1 und aus der zweiten Messspannung U2 und/oder aus einer Differenz Uq = U2 - U1 und/oder aus einer Summe UV = U2 + U1 der Messspannungen U1, U2 zunächst jeweils ein Effektivspannungswert ermittelt wird und dass aus den so gebildeten Effektivspannungswerten unter Berücksichtigung von vorvermessenen Motorkenndaten eine Drehzahl n und/oder ein Motordrehmoment Mi und/oder ein Motorstrom I ermittelt wird.

Die Messspannungen U1, U2 können sowohl in der positiven als auch in der negativen Halbwelle erfasst und ausgewertet werden. Soweit es die Anwendung zulässt, ist es aber auch möglich, die Messspannungen U1, U2 nur in der positiven oder nur in der negativen Halbwelle zu erfassen und auszuwerten.

Die in der vorstehenden Beschreibung, in den Zeichnungen sowie in den Ansprüchen offenbarte Merkmale der Erfindung und des Stands der Technik können sowohl einzeln als auch in beliebiger Kombination für die Verwirklichung der Erfindung im Rahmen der zugehörigen Ansprüche wesentlich sein.

## Patentansprüche

1. Vorrichtung (12) mit einer elektrischen Maschine (16), einer
Spannungserfassungsvorrichtung und einer Auswertevorrichtung;
wobei die elektrische Maschine (16) ein festes Teil sowie ein bewegliches Teil, das relativ zu dem festen Teil beweglich ist, umfasst;
wobei das feste oder bewegliche Teil der elektrischen Maschine (16) zumindest eine erste Feldwicklung (F1) aufweist, an der während eines Betreibens der elektrischen Maschine (16) eine erste elektrische Messspannung (U1) anliegt;
und wobei das andere der beiden Teile der elektrischen Maschine (16) eine Ankerwicklung (24) aufweist, in der während des Betreibens der elektrischen Maschine (16) aufgrund einer Relativbewegung zwischen dem festen und beweglichen Teil eine elektrische Spannung (Uq) induziert wird;
**dadurch gekennzeichnet, dass** sich die induzierte elektrische Spannung (Uq) ergibt aus der Differenz (U2 - U1) einer zweiten elektrischen Messspannung (U2), die über einer aus zumindest der ersten Feldwicklung (F1) und der Ankerwicklung (24) bestehenden Reihenschaltung anliegt, und der ersten Messspannung (U1);
wobei die Spannungserfassungsvorrichtung dazu vorgesehen ist, ein Merkmal der induzierten elektrischen Spannung (Uq) zu erfassen; und
wobei die Auswertevorrichtung dazu vorgesehen ist, einen Betriebszustand (n, Mi, I) der elektrischen Maschine (16) unter Berücksichtigung des erfassten Merkmals der induzierten elektrischen Spannung (Uq) zu ermitteln.

2. Vorrichtung (12) nach Anspruch 1, wobei das erfasste Merkmal der induzierten elektrischen Spannung (Uq) eine Höhe, ein Effektivwert und/oder eine Phasenlage der induzierten elektrischen Spannung (Uq) ist.

3. Vorrichtung (12) nach einem der Ansprüche 1 oder 2, wobei der zu ermittelnde Betriebszustand (n, Mi, I) ein Drehmoment (Mi), eine Drehzahl (n) und/oder eine Stärke eines von der elektrischen Maschine (16) aufgenommenen elektrischen Stroms (I) ist.

4. Vorrichtung (12) nach Anspruch 3, wobei die Auswertevorrichtung die Drehzahl (n) unter Berücksichtigung eines Spannungsverhältnisses (Uq/U1) zwischen der induzierten Spannung (Uq) und der ersten Messspannung (U1) ermittelt.

5. Vorrichtung (12) nach einem der Ansprüche 1 bis 4, wobei zumindest ein Teil des Stroms (I), der durch die erste Feldwicklung (F1) fließt, auch durch eine zweite Feldwicklung (F2) fließt.

6. Verfahren zur Ermittlung eines Betriebszustandes (n, Mi, I) einer elektrischen Maschine (16), wobei die elektrische Maschine (16) zur Umwandlung von elektrischer in mechanische Energie und/oder von mechanischer in elektrische Energie vorgesehen ist, wobei das Verfahren folgende Schritte umfasst:
- direktes oder mittelbares Erfassen eines Effektivwerts (U1_{eff}) einer ersten elektrischen Messspannung (U1) an zumindest einer ersten Feldwicklung (F1) der elektrischen Maschine (16);
- direktes oder mittelbares Erfassen eines Effektivwerts (U2_{eff}) einer zweiten elektrischen Messspannung (U2) an einer zumindest aus der ersten Feldwicklung (F1) und einer Ankerwicklung (24) der elektrischen Maschine (16) bestehenden Reihenschaltung und
- Ermitteln des Betriebszustands (n, Mi, I) unter Berücksichtigung einer induzierten Spannung (Uq), die sich aus der Differenz (U2_{eff}-U1_{eff}) der erfassten Effektivwerte (U2_{eff}, U1_{eff}) der zweiten und der ersten elektrischen Messspannung (U2, U1) ergibt.

7. Verfahren nach Anspruch 6, wobei der zu ermittelnde Betriebszustand (n, Mi, I) ein Drehmoment (Mi), eine Drehzahl (n) und/oder eine Stärke eines von der elektrischen Maschine (16) aufgenommenen elektrischen Stroms (I) ist.

8. Verfahren nach Anspruch 7, wobei die Drehzahl (n) unter Berücksichtigung eines Spannungsverhältnisses (Uq_{eff}/U1_{eff}) zwischen den Effektivwerten (Uq_{eff}, U1_{eff}) der induzierten Spannung (Uq) und der ersten Messspannung (U1) ermittelt wird.

## Claims

1. Device (12) having an electric machine (16), a voltage detection device and an evaluation device; wherein the electric machine (16) comprises a fixed part and a moveable part, which is moveable relative to the fixed part;
wherein the fixed or moveable part of the electric machine (16) has at least one first field winding (F1) to which a first measured voltage (U1) is applied during an operation of the electric machine (16);
and wherein the other one of the two parts of the electric machine (16) has an armature winding (24) in which a voltage (Uq) is induced during the operation of the electric machine (16) owing to a relative movement between the fixed and moveable parts;
**characterized in that** the induced voltage (Uq) arises from the difference (U2-U1) between a second measured voltage (U2), which is applied across a series circuit consisting of at least the first field winding (F1) and the armature winding (24), and the first measured voltage (U1);
wherein the voltage detection device is provided to detect a characteristic of the induced voltage (Uq); and
wherein the evaluation device is provided to determine an operating state (n, Mi, I) of the electric machine (16) taking into account the detected characteristic of the induced voltage ((Uq).

2. Device (12) according to Claim 1, wherein the detected characteristic of the induced voltage (Uq) is a magnitude, an rms value and/or a phase angle of the induced voltage (Uq).

3. Device (12) according to either of Claims 1 and 2, wherein the operating state (n, Mi, I) to be determined is a torque (Mi), a rotational speed (n) and/or a strength of an electric current (I) entering the electric machine (16).

4. Device (12) according to Claim 3, wherein the evaluation device determines the rotational speed (n) taking into account a voltage ratio (Uq/U1) between the induced voltage (Uq) and the first measured voltage (U1).

5. Device (12) according to one of Claims 1 to 4, wherein at least a part of the current (I) which flows through the first field winding (F1) also flows through a second field winding (F2).

6. Method for determining an operating state (n, Mi, I) of an electric machine (16), wherein the electric machine (16) is provided for converting electrical energy into mechanical energy and/or mechanical energy into electrical energy, the method comprising the following steps:
- directly or indirectly detecting an rms value (U1ᵣₘₛ) of a first measured voltage (U1) at at least a first field winding (F1) of the electric machine (16);
- directly or indirectly detecting an rms value (U2ᵣₘₛ) of a second measured voltage (U2) at a series circuit consisting at least of the first field winding (F1) and an armature winding (24) of the electric machine (16); and
- determining the operating state (n, Mi, I) taking into account an induced voltage (Uq) which arises from the difference (U2ᵣₘₛ-U1ᵣₘₛ) between the detected rms values (U2ᵣₘₛ, U1ᵣₘₛ) of the second and the first measured voltages (U2, U1).

7. Method according to Claim 6, wherein the operating state (n, Mi, I) to be determined is a torque (Mi), a rotational speed (n) and/or a strength of an electric current (I) entering the electric machine (16).

8. Method according to Claim 7, wherein the rotational speed (n) is determined taking into account a voltage ratio (Uqᵣₘₛ/U1ᵣₘₛ) between the rms values (Uqᵣₘₛ, U1ᵣₘₛ) of the induced voltage (Uq) and the first measured voltage (U1).

## Revendications

1. Ensemble (12) présentant une machine électrique (16), un ensemble de saisie de tension et un ensemble d'évaluation,
la machine électrique (16) comportant une partie fixe ainsi qu'une partie mobile apte à être déplacée par rapport à la partie fixe,
la partie fixe ou la partie mobile de la machine électrique (16) présentant au moins un premier enroulement de champ (F1) sur laquelle une première tension électrique de mesure (U1) est appliquée pendant que la machine électrique (16) est utilisée,
l'autre des deux parties de la machine électrique (16) présentant un enroulement d'induit (24) dans lequel une tension électrique (Uq) est induite pendant l'utilisation de la machine électrique (16) suite au déplacement relatif entre la partie fixe et la partie mobile,
**caractérisé en ce que**
la tension électrique induite (Uq) résulte de la différence (U2-U1) entre une deuxième tension électrique de mesure (U2) appliquée par un circuit série constitué d'au moins le premier enroulement de champ (F1) et l'enroulement d'induit (24) et la première tension de mesure (U1),
**en ce que** l'ensemble de saisie de tension est prévu pour saisir une caractéristique de la tension électrique induite (Uq) et
**en ce que** l'ensemble d'évaluation est prévu pour déterminer un état de fonctionnement (n, Mi, I) de la machine électrique (16) en tenant compte de la caractéristique saisie de la tension électrique induite (Uq).

2. Ensemble (12) selon la revendication 1, dans lequel la caractéristique saisie de la tension électrique induite (Uq) est le niveau, la valeur efficace et/ou la phase de la tension électrique induite (Uq).

3. Ensemble (12) selon l'une des revendications 1 ou 2, dans lequel l'état de fonctionnement (n, Mi, I) à déterminer est le couple de rotation (Mi), la vitesse de rotation (n) et/ou l'intensité du courant électrique (I) consommé par la machine électrique (16).

4. Ensemble (12) selon la revendication 3, dans lequel l'ensemble d'évaluation détermine la vitesse de rotation (n) en tenant compte du rapport (Uq/U1) entre la tension induite (Uq) et la première tension de mesure (U1).

5. Ensemble (12) selon l'une des revendications 1 à 4, dans lequel au moins une partie du courant (I) qui traverse le premier enroulement de champ (F1) traverse également un deuxième enroulement de champ (F2).

6. Procédé de détermination de l'état de fonctionnement (n, Mi, I) d'une machine électrique (16),
la machine électrique (16) étant prévue pour convertir de l'énergie électrique en énergie mécanique et/ou de l'énergie mécanique en énergie électrique,
le procédé comportant les étapes suivantes :
détermination directe ou indirecte d'une valeur efficace (U1_{eff}) d'une première tension électrique de mesure (U1) sur au moins un premier enroulement de champ (F1) de la machine électrique (16),
saisie directe ou indirecte d'une valeur efficace (U2_{eff}) d'une deuxième tension électrique de mesure (U2) sur un circuit série constitué d'au moins le premier enroulement de champ (F1) et d'un enroulement d'induit (24) de la machine électrique (16) et
détermination de l'état de fonctionnement (n, Mi, I) en tenant compte de la tension induite (Uq) qui résulte de la différence (U2_{eff}-U1_{eff}) entre les valeurs effectives (U2_{eff}, U1_{eff}) saisies de la deuxième et de la première tension électrique de mesure (U2, U1).

7. Procédé selon la revendication 6, dans lequel l'état de fonctionnement (n, Mi, I) à déterminer est le couple de rotation (Mi), la vitesse de rotation (n) et/ou l'intensité du courant électrique (I) consommé par la machine électrique (16).

8. Procédé selon la revendication 7, dans lequel la vitesse de rotation (n) est déterminée en tenant compte du rapport (Uq_{eff}/U1_{eff}) entre les valeurs effectives (Uq_{eff}, U1_{eff}) de la tension induite (Uq) et de la première tension de mesure (U1).
